# EUROPEAN PATENT APPLICATION

(11) **EP 4 550 805 A1**
(43) Date of publication of application: **07.05.2025**
(21) Application number: 23829733.7
(22) Date of filing: 11.05.2023
(51) Int. Cl.: H04N 21/431

(54) **MULTIMEDIA PLAYBACK METHOD, DEVICE, STORAGE MEDIUM, AND PROGRAM PRODUCT**

(30) Priority: 01.07.2022 CN 202210773127
(71) Applicant: Beijing Zitiao Network Technology Co., Ltd., Beijing 100190 (CN)
(72) Inventor: CHEN, Jiayun, Beijing 100028 (CN); DING, Chunhui, Beijing 100028 (CN); YANG, Bowen, Beijing 100028 (CN); ZHANG, Duo, Beijing 100028 (CN); LIN, Zhongheng, Beijing 100028 (CN)
(74) Representative: Dentons UK and Middle East LLP
(86) International application number: PCT/CN2023/093678
(87) International publication number: WO 2024/001547

(57) **Abstract**

Embodiments of the present disclosure provide a multimedia playback method and apparatus, an electronic device, a computer-readable storage medium, a computer program product, and a computer program. The method comprises: in response to a first operation instruction in a player interface, obtaining first-type multimedia content stream data or second-type multimedia content stream data, the first-type multimedia content stream data comprising a single piece of multimedia content, and the second-type multimedia content stream data comprising a multimedia content set; if the second-type multimedia content stream data is obtained, displaying a multimedia content set playback interface in the player interface, and playing back the multimedia content in the second-type multimedia content stream data; and in response to a second operation instruction in the multimedia content set playback interface, switching to another piece of multimedia content in the second-type multimedia content stream data for playback. According to the embodiments of the present disclosure, a user can efficiently find multimedia content of interest, so that the promotion of multimedia content is facilitated; moreover, the user can conveniently switch multimedia content in a player, such that the use experience on the player is improved.

## Description

### CROSS-REFERENCE TO RELATED APPLICATION

The present application claims the priority of China Patent Application No. 202210773127.1 filed on Jul. 1, 2022 in China Patent Office and entitled " MULTIMEDIA PLAYING METHOD, DEVICE, STORAGE MEDIUM, AND PROGRAM PRODUCT", the entirety of which is incorporated into the present application by reference.

### TECHNICAL FIELD

The embodiments of the disclosure relate to the technical field of computer and network communication, in particular to a multimedia playing method, apparatus, electronic device, computer-readable storage medium, computer program product, and computer program.

### BACKGROUND

With the development of Internet technology, various players have emerged. The user can play a multimedia content using a player, such as listening to songs, to achieve goals of relaxation and recreation, and sentiment cultivation, etc.

The existing players usually require the user to search for a single multimedia content or a multimedia content collection of his/her own interests, or exhibit single multimedia content or multimedia content collection in the player interface in advance for the user to choose, and then request to download from the server the single multimedia content or multimedia content collection searched or selected by the user and play it.

The existing players require the user to actively search for or select a single multimedia content or a multimedia content collection and then play it, which not only hinders the propagation and promotion of multimedia content, but also makes it less convenient for the user to discover multimedia content of interest.

### SUMMARY

The embodiments of the present disclosure provide a multimedia playing method and apparatus, an electronic device, computer-readable storage medium, computer program product, and computer program.

In the first aspect, the embodiments of the present disclosure provide a multimedia playing method, which includes:
acquiring, in response to the first operation instruction in a player interface, the first-type multimedia content stream data or the second-type multimedia content stream data; in which the first-type multimedia content stream data comprises a single multimedia content, and the second-type multimedia content stream data comprises a multimedia content collection;
displaying, in response to acquiring the second-type multimedia content stream data, a multimedia content collection playing interface in the player interface, and playing multimedia contents in the second-type multimedia content stream data in a preset order;
switching to and playing, in response to a second operation instruction in the multimedia content collection playing interface, another multimedia content in the second-type multimedia content stream data, in which an operation mode corresponding to the second operation instruction is different from that of the first operation instruction.

In the second aspect, the embodiments of the present disclosure provide a multimedia playing method, which includes:
receiving a request for multimedia content stream data;
determining, according to a preset recommendation algorithm, the first-type multimedia content stream data to be recommend or the second-type multimedia content stream data to be recommended;
returning, according to the request, the first-type multimedia content stream data or the second-type multimedia content stream data, to cause a requester to display a corresponding playing interface according to the first-type multimedia content stream data or the second-type multimedia content stream data and play.

In the third aspect, the embodiments of the present disclosure provide a multimedia playing apparatus, which includes: an acquiring unit, a playing unit, and a switching unit.

The acquiring unit is configured to acquire, in response to a first operation instruction in a player interface, first-type multimedia content stream data or second-type multimedia content stream data. The first-type multimedia content stream data comprises a single multimedia content, and the second-type multimedia content stream data comprises a multimedia content collection.

The playing unit is configured to display, in response to acquiring the second-type multimedia content stream data, a multimedia content collection playing interface in the player interface, and play multimedia contents in the second-type multimedia content stream data in a preset order.

The switching unit is configured to switch to and play, in response to a second operation instruction in the multimedia content collection playing interface, another multimedia content in the second-type multimedia content stream data. The operation mode corresponding to the second operation instruction is different from the operation mode corresponding to the first operation instruction.

**In** the fourth aspect, the embodiments of the present disclosure provide a multimedia playing apparatus, which includes: a receiving unit, a recommending unit, and a sending unit.

The receiving unit is configured to receive a request for multimedia content stream data.

The recommending unit is configured to determine, according to a preset recommendation algorithm, first-type multimedia content stream data to be recommend or second-type multimedia content stream data to be recommended.

The sending unit is configured to return, according to the request, the first-type multimedia content stream data or the second-type multimedia content stream data, to cause a requester to display a corresponding playing interface according to the first-type multimedia content stream data or the second-type multimedia content stream data and play.

In the fifth aspect, the embodiments of the present disclosure provide an electronic device, which includes at least one processor and a memory.

The memory stores computer-executable instructions.

The at least one processor executes the computer-executable instructions stored in the memory, causing the at least one processor to implement the multimedia playing method described in the first aspect and various possible designs of the first aspect above or the multimedia playing method described in the second aspect and various possible designs of the second aspect above.

In the sixth aspect, the embodiments of the present disclosure provide a computer-readable storage medium having stored therein computer-executable instructions which, when executed by a processor, implement the multimedia playing method described in the first aspect and various possible designs of the first aspect above or the multimedia playing method described in the second aspect and various possible designs of the second aspect above.

In the seventh aspect, the embodiments of the present disclosure provide a computer program product comprising computer-executable instructions which, when executed by a processor, cause the processor to implement the multimedia playing method described in the first aspect and various possible designs of the first aspect above or the multimedia playing method described in the second aspect and various possible designs of the second aspect above.

In the eighth aspect, the embodiments of the present disclosure provide a computer program which, when executed by a processor, causes the processor to implement the multimedia playing method described in the first aspect and various possible designs of the first aspect above or the multimedia playing method described in the second aspect and various possible designs of the second aspect above.

### BRIEF DESCRIPTION OF DRAWINGS

In order to illustrate the technical schemes of the embodiments of the present disclosure or the prior art more clearly, the drawings used in the descriptions for the technical schemes of the embodiments or the prior art will be briefly introduced. Obviously, the drawings described below are some embodiments of the present disclosure. Those skilled in the art can obtain other drawings from these drawings, without any inventive work.
Fig. 1 is an example diagram of a scenario of a multimedia playing method provided by an embodiment of the present disclosure;
Fig. 2 is a flowchart of a multimedia playing method provided by an embodiment of the present disclosure;
Fig. 3a is a diagram of a multimedia content collection playing interface provided by an embodiment of the present disclosure;
Fig. 3b is a diagram of a second operation instruction in the multimedia content collection playing interface provided by an embodiment of the present disclosure;
Fig. 3c is a diagram of another second operation instruction in the multimedia content collection playing interface provided by another embodiment of the present disclosure;
Fig. 4 is a flowchart of a multimedia playing method provided by another embodiment of the present disclosure;
Fig. 5 is a flowchart of a multimedia playing method provided by another embodiment of the present disclosure;
Fig. 6 is a flowchart of a multimedia playing method provided by another embodiment of the present disclosure;
Fig. 7 is a structural block diagram of a multimedia playing apparatus provided by an embodiment of the present disclosure;
Fig. 8 is a structural block diagram of a multimedia playing apparatus provided by another embodiment of the present disclosure; and
Fig. 9 is a hardware structural diagram of an electronic device provided by an embodiment of the present disclosure.

### DETAILED DESCRIPTION

In order to make objects, technical schemes and advantages of the embodiments of the present disclosure more apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments of the present disclosure, those skilled in the art can obtain other embodiment(s), without any inventive work, which should be within the scope of the present disclosure.

The existing players usually require the user to search for a single multimedia content or a multimedia content collection of his/her own interests, or exhibit some single multimedia content or multimedia content collection in the player interface in advance for the user to choose, and then request to download from the server the single multimedia content or multimedia content collection searched or selected by the user and play it.

The existing players require the user to actively search for or select a single multimedia content or a multimedia content collection and then play it, and when the user is not aware of a certain multimedia content or multimedia content collection, he/she might not actively search for or select this multimedia content or multimedia content collection, which is not only inconvenient for the propagation and promotion of multimedia content, but also for the discovery of multimedia content of interest by the user.

In order to solve the above technical problems, the present disclosure provides a multimedia playing method implementing a combination of playing single multimedia content stream data and playing multimedia content collection stream data in a player, which makes the user to discover multimedia content of interests more efficiently and facilitates the propagation and promotion of multimedia content. Specifically, the method includes: acquiring, in response to a first operation instruction in a player interface, first-type multimedia content stream data or second-type multimedia content stream data; in which the first-type multimedia content stream data includes a single multimedia content, and the second-type multimedia content stream data includes a multimedia content collection; displaying, in response to acquiring the second-type multimedia content stream data, a multimedia content collection playing interface in the player interface, and playing multimedia contents in the second-type multimedia content stream data in a preset order; switching to an playing, in response to a second operation instruction in the multimedia content collection playing interface, to another multimedia content in the second-type multimedia content stream data, in which an operation mode corresponding to the second operation instruction is different from the first operation instruction. The embodiments of the present disclosure can implement a combination of playing the first-type multimedia content stream data and playing the second-type multimedia content stream data in the player, which makes the user to discover multimedia content of interests more efficiently, and facilitate the propagation and promotion of multimedia content; and can provide a function of switching between multimedia content stream data and provide a function of switching between multimedia contents in the second-type multimedia content stream data in the multimedia content collection playing interface, so that the user can switch multimedia contents in the player more conveniently, which facilitates the selection and switching of the multimedia content of interests for the user, thereby improving the use experience of the player.

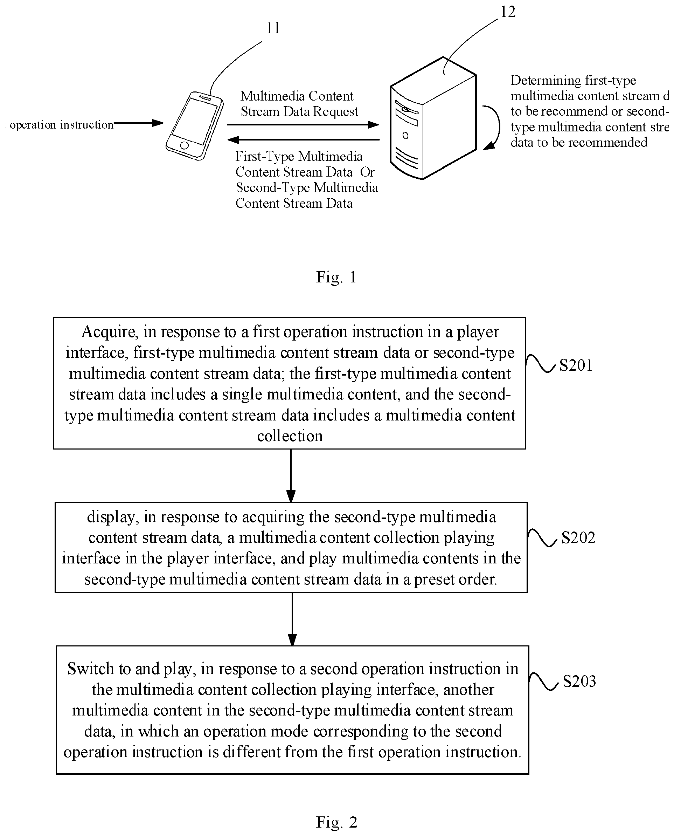

The multimedia playing method provided by the present disclosure is applicable to an application scenario as illustrated in Fig. 1, including a terminal 11 and a server 12. The terminal 11 requests multimedia content stream data from the server 12 in response to a first operation instruction in the player interface. The server 12 may determine, according to a preset recommendation algorithm, first-type multimedia content stream data to be recommend or second-type multimedia content stream data to be recommended, and return it to the terminal 11. When what is returned by the server 12 is the second-type multimedia content stream data, the terminal 11 displays a multimedia content collection playing interface in the player interface, and plays multimedia contents in the second-type multimedia content stream data in a preset order; switches to and plays, in response to a second operation instruction in the multimedia content collection playing interface, another multimedia content in the second-type multimedia content stream data, in which an operation mode corresponding to the second operation instruction is different from an operation mode corresponding to the first operation instruction.

A multimedia playing method of the present disclosure will be described in detail in conjunction with specific embodiments.

Referring to Fig. 2, Fig. 2 is a flowchart of a multimedia playing method provided by an embodiment of the present disclosure. The method of this embodiment can be applied to an electronic device such as a terminal, and the multimedia playing method includes:
S201: acquiring, in response to a first operation instruction in a player interface, first-type multimedia content stream data or second-type multimedia content stream data; in which the first-type multimedia content stream data includes a single multimedia content, and the second-type multimedia content stream data includes a multimedia content collection.

In this embodiment, the player may play the multimedia content in the form of feed stream data, that is, an information stream of multimedia content which is continuously updated and presented to the user, and the user may switch to the next multimedia content stream data by triggering. Precise delivery of multimedia content stream data to the user through the server can facilitate the propagation and promotion of multimedia content and facilitate the user to discover multimedia content of interests more efficiently. The multimedia content may include but not limited to music, video, etc.

The user may trigger the first operation instruction in the player interface to request to acquire multimedia content stream data. The first operation instruction may be a sliding operation in the up-and-down direction in the current player interface. Specifically, a sliding up operation may cause to switch to a next multimedia content stream data, and a sliding down operation may cause to switch to a previous multimedia content stream data. Alternatively, the first operation instruction may also be a sliding operation in the left-and-right direction. Specifically, a sliding left operation may cause to switch to a next multimedia content stream data, and a sliding right operation may cause to switch a previous multimedia content stream data. Of course, the first operation instruction may also be other operations, which may not be limited here.

**In** this embodiment, multimedia content stream data may be classified into a first-type multimedia content stream data and a second-type multimedia content stream data. The first-type multimedia content stream data only includes one multimedia content, whereas the second-type multimedia content stream data may include at least two multimedia contents, that is, a multimedia content collection. Optionally, taking music as an example, the first-type multimedia content stream data may be single song stream data, which includes one piece of song. However, the second-type multimedia content stream data may be song collection stream data, which may include at least two pieces of songs. The second-type multimedia content stream data may also be radio station stream data, which is stream data composed of at least two pieces of songs selected from a same type of song pool.

Optionally, in this embodiment, the multimedia content stream data may be request by the terminal from the server. The server may determine, according to a preset recommendation algorithm, whether to push the first-type multimedia content stream data or the second-type multimedia content stream data to the terminal, and may transmit the first-type multimedia content stream data to be recommended to the terminal if a single multimedia content feed data is determined to be pushed, and transmit the second-type multimedia content stream data to be recommended t to the terminal if the second-type multimedia content stream data is determined to be pushed.

Optionally, in this embodiment, the multimedia content may also be configured locally in the terminal, and at this time, the first-type multimedia content stream data or the second-type multimedia content stream data are acquired by the terminal according to the preset recommendation algorithm.

S202: displaying, in response to acquiring the second-type multimedia content stream data, a multimedia content collection playing interface in the player interface, and playing multimedia contents in the second-type multimedia content stream data in a preset order.

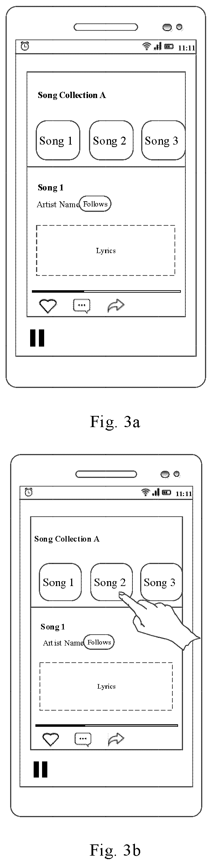

**In** this embodiment, in the player interface of the terminal, there is a certain difference between a playing interface for the first-type multimedia content stream data and a playing interface for the second-type multimedia content stream data, in which in a single multimedia content playing interface when playing the first-type multimedia content stream data, only the single multimedia content information needs to be exhibited, including but not limited to multimedia content name, artist name, lyrics, etc., as well as interface components such as follows, repost and comment and like, progress bar, etc.; whereas in a multimedia content collection playing interface when playing the second-type multimedia content stream data, the multimedia content collection information and the relevant information of the multimedia content being played currently needs to be exhibited, in which the multimedia content collection information includes but is not limited to multimedia content collection type, multimedia content collection name, cover pictures and titles of respective multimedia contents within multimedia content collection, and the relevant information of the multimedia content being played currently includes but is not limited to multimedia content name, artist name, lyrics, etc., as well as interface components such as follows, repost and comment and like, progress bar, etc. Optionally, as illustrated in Fig. 3a, taking music as an example, the upper half region of the multimedia content collection playing interface exhibits the multimedia content collection information, and the lower half region of the multimedia content collection playing interface displays the relevant information of the multimedia content being played currently. Of course, other layouts may be employed.

Optionally, when playing any multimedia content in the second-type multimedia content stream data, the relevant information of the multimedia content being played currently is exhibited in a preset region of the multimedia content collection playing interface, including but not limited to multimedia content name, artist name, lyrics, etc. In addition, the user may also follow the artist of, repost and comment and like, etc., the multimedia content collection and/or any multimedia content therein. In addition, when the player shuts down the screen or switches to the background, the playing may still be maintained.

Further, after acquiring the multimedia content stream data, it may be judged whether the multimedia content stream data is the first-type multimedia content stream data or the second-type multimedia content stream data. If it is determined that what is received is the first-type multimedia content stream data, a single multimedia content playing interface is displayed in the player interface, and a single multimedia content in the first-type multimedia content stream data is played. If it is determined that what is received is the second-type multimedia content stream data, a multimedia content collection playing interface is displayed in the player interface, and multimedia contents in the second-type multimedia content stream data are played in a preset order, in which the preset order may be from front to back in a multimedia content sorting, or in a random order, or in other orders, which may not be limited here. The multimedia content to be played first may be the first multimedia content in the multimedia content sorting, or any multimedia content. Optionally, a list may be circulated if the playing of all the multimedia contents are completed.

S203: switching to and playing, in response to a second operation instruction in the multimedia content collection playing interface, another multimedia content in the second-type multimedia content stream data, in which an operation mode corresponding to the second operation instruction is different from an operation mode corresponding to the first operation instruction.

**In** this embodiment, since the multimedia content collection includes a plurality of multimedia contents, the multimedia contents may be switched in the multimedia content collection playing interface. The user may perform a second switching operation in the multimedia content collection playing interface. The terminal switches, in response to the user's second operation instruction in the multimedia content collection playing interface, to another multimedia content in the second multimedia content stream data and play it. The other multimedia content may be another adjacent multimedia content, or any other multimedia content in the second-type multimedia content stream data. The operation mode corresponding to the second operation instruction is different from the first operation instruction. The first operation instruction is used for switching between multimedia content stream data, whereas the second operation instruction is used for switching between multimedia contents in the second-type multimedia content stream data.

In an alternative embodiment, the multimedia content collection playing interface includes an interface component corresponding to each multimedia content in the second-type multimedia content stream data, such as interface components corresponding to cover pictures and/or titles of respective multimedia contents. The second operation instruction may be a trigger instruction for an interface component corresponding to any target multimedia content, such as a click operation instruction for the cover picture of the target multimedia content, or a click operation instruction for the title of the target multimedia content, and the like, as illustrated in Fig. 3b. In turn, the terminal switches, in response to the user's trigger instruction for an interface component corresponding to any target multimedia content in the multimedia content collection playing interface, from the multimedia content being played currently to the target multimedia content and plays it, which facilitates the user to freely select and switch to a multimedia content that needs to be played.

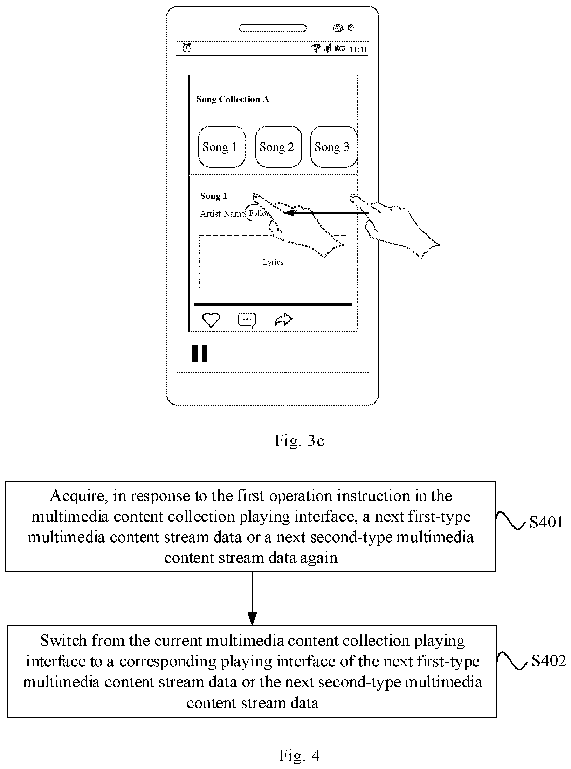

In another alternative embodiment, the second operation instruction may also be a sliding operation in a specified direction in the multimedia content collection playing interface. If the first operation instruction is also a sliding operation, the sliding direction may be different from the first operation instruction. For example, if the first operation instruction is a sliding operation in the up-and-down direction, the second operation instruction may be a sliding operation in the left-and-right direction (as illustrated in Fig. 3c), or alternatively, if the first operation instruction is a sliding operation in the left-and-right direction, the second operation instruction may be a sliding operation in the up-and-down direction. Further, the terminal switches, in response to the user's sliding operation in the specified direction in the multimedia content collection playing interface, to a multimedia content adjacent to the multimedia content being played currently in the second-type multimedia content stream data, or another target multimedia content, and plays it, which may be more convenient for the user to realize the switching of multimedia contents within the multimedia content collection through a simple sliding operation, in which the multimedia content adjacent to the multimedia content being played currently may be an adjacent multimedia content in the multimedia content sorting, or an adjacent multimedia content in a random order when playing the multimedia contents in a random order.

In this embodiment, switching from the current second-type multimedia content stream data to another multimedia content stream data according to the first operation instruction is supported in the multimedia content collection playing interface, and switching from the multimedia content being played currently in the current second-type multimedia content stream data to another multimedia content in the current second-type multimedia content stream data according to the second operation instruction is also supported. However, in the single multimedia content playing interface, since there is only one piece of multimedia content, only switching from the current first multimedia content stream data to another multimedia content stream data according to the first operation instruction is supported in the single multimedia content playing interface.

As an example, in response to a first operation instruction in the player interface, single song stream data or song collection stream data is acquired. In response to acquiring the song collection stream data, a song collection playing interface is displayed in the player interface, and songs in the song collection stream data are played in a preset order. In response to a second operation instruction in the song collection playing interface, another song in the song collection stream data is switched to and played. The operation mode corresponding to the second operation instruction is different from the first operation instruction.

The multimedia playing method of this embodiment includes: acquiring, in response to a first operation instruction in a player interface, first-type multimedia content stream data or second-type multimedia content stream data; in which the first-type multimedia content stream data includes a single multimedia content, and the second-type multimedia content stream data includes a multimedia content collection; displaying, in response to acquiring the second-type multimedia content stream data, a multimedia content collection playing interface in the player interface, and playing multimedia contents in the second-type multimedia content stream data in a preset order; switching to and playing, in response to a second operation instruction in the multimedia content collection playing interface, another multimedia content in the second-type multimedia content stream data, in which an operation mode corresponding to the second operation instruction is different from an operation mode corresponding to the first operation instruction. This embodiment can implement a combination of playing the first-type multimedia content stream data and playing the second-type multimedia content stream data in the player, which makes the user to discover multimedia content of interests more efficiently, and facilitate the propagation and promotion of multimedia content; and can provide a function of switching between multimedia content stream data and provide a function of switching between multimedia contents in the second-type multimedia content stream data in the multimedia content collection playing interface, so that the user can switch multimedia contents in the player more conveniently, which facilitates the selection and switching of the multimedia content of interests for the user, thereby improving the use experience of the player.

On the basis of any of the above embodiments, as illustrated in Fig. 4, the method may further include:
S401: acquiring, in response to the first operation instruction in the multimedia content collection playing interface, a next first-type multimedia content stream data or a next second-type multimedia content stream data again;
S402: switching from the current multimedia content collection playing interface to a corresponding playing interface of the next first-type multimedia content stream data or the next second-type multimedia content stream data.

In this embodiment, in the process of playing the second-type multimedia content stream data, the user may perform a first switching operation in the multimedia content collection playing interface. The terminal acquires, in response to a first operation instruction in the multimedia content collection playing interface, a next multimedia content stream data again. The next multimedia content stream data may be the first-type multimedia content stream data or the second-type multimedia content stream data. The player of the terminal may display a corresponding playing interface according to the first-type multimedia content stream data or the second-type multimedia content stream data, the process of which is the same as the above embodiment, which will not be detailed here. By realizing the switching between multimedia content stream data through the first operation instruction in the multimedia content collection playing interface, the player interface is switched from the current multimedia content collection playing interface to a corresponding playing interface of the next multimedia content stream data, that is, to a playing interface for the next first-type multimedia content stream data or a playing interface for the next second-type multimedia content stream data.

Further, before the switching from the current multimedia content collection playing interface to a corresponding playing interface of the next first-type multimedia content stream data or the next second-type multimedia content stream data in S402, current playing progress information of the second-type multimedia content stream data may be recorded, that is, to which multimedia content is being played, or alternatively, to which specific moment of multimedia content is being played may be recorded;

On this basis, after the switching from the current multimedia content collection playing interface to a corresponding playing interface of the next first-type multimedia content stream data or the next second-type multimedia content stream data in S402, the method may further include:
switching, in response to a return operation instruction in the corresponding playing interface of the next first-type multimedia content stream data or the next second-type multimedia content stream data, back to the current multimedia content collection playing interface, and continuing, according to the playing progress information of the second-type multimedia content stream data, to play the multimedia content in the second-type multimedia content stream data.

In this embodiment, after having switched to the next multimedia content stream data, a return operation may be further performed, especially for the second-type multimedia content stream data. Assuming that the second-type multimedia content stream data is A, after switching from the second-type multimedia content stream data A to the next multimedia content stream data B (not limited to the first-type multimedia content stream data or another second-type multimedia content stream data), the terminal may switch, in response to the user's return operation instruction in a playing interface corresponding to the next multimedia content stream data B, back to the multimedia content collection playing interface of the second-type multimedia content stream data A from the playing interface corresponding to the next multimedia content stream data B, that is, back to the second-type multimedia content stream data and play it. The multimedia content in the second-type multimedia content stream data A may be continued to be played according to the previously recorded playing progress information of the second-type multimedia content stream data A. For example, it is previously recorded that the second-type multimedia content stream data A has been played until the m-th second of the n-th multimedia content, then at this time, the n-th multimedia content may be re-played, or the playing may be continued from the m-th second of the n-th multimedia content.

The return operation instruction may be the reverse operation instruction of the first operation instruction. For example, when the first operation instruction is a sliding up operation instruction, the return operation instruction may be a sliding down operation instruction. Of course, other forms of operation instructions may be possible, which may not be limited here.

On the basis of any of the above embodiments, the multimedia content may also be configured locally at the terminal, and at this time, the first-type multimedia content stream data or the second-type multimedia content stream data is acquired by the terminal according to the preset recommendation algorithm.

Optionally, the determining, according to a preset recommendation algorithm, first-type multimedia content stream data to be recommend or second-type multimedia content stream data to be recommended includes:
determining, according to the preset recommendation algorithm, the first-type multimedia content stream data to be recommended and the second-type multimedia content stream data to be recommended, respectively;
determining recommendation scores for the first-type multimedia content stream data and the second-type multimedia content stream data, respectively;
selecting, according to sizes of the recommendation scores, from the first-type multimedia content stream data and the second-type multimedia content stream data.

Optionally, after determining the second-type multimedia content stream data to be recommended, the method further includes:
determining whether the second-type multimedia content stream data to be recommended is duplicated with historical second-type multimedia content stream data already recommended within a predetermined time period;
re-determining, if it is determined that the second-type multimedia content stream data to be recommended is duplicated with the historical second-type multimedia content stream data already recommended within the predetermined time period, the second-type multimedia content stream data to be recommended.

Optionally, after determining the first-type multimedia content stream data to be recommended, the method further includes:
determining whether a multimedia content in the first-type multimedia content stream data to be recommended is duplicated with a multimedia content in historical second-type multimedia content stream data already recommended within a predetermined time period;
re-determining, if it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determining, if it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

Optionally, before recommending the second-type multimedia content stream data, the method further includes:
acquiring a recommendation score for each multimedia content in the second-type multimedia content stream data, and sorting, according to the recommendation score, respective multimedia contents in the second-type multimedia content stream data; and/or
postponing, if any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

The specific principles and technical effects of the terminal acquiring the first-type multimedia content stream data or the second-type multimedia content stream data according to the preset recommendation algorithm as described above are similar to the following embodiments, which will not be detailed here.

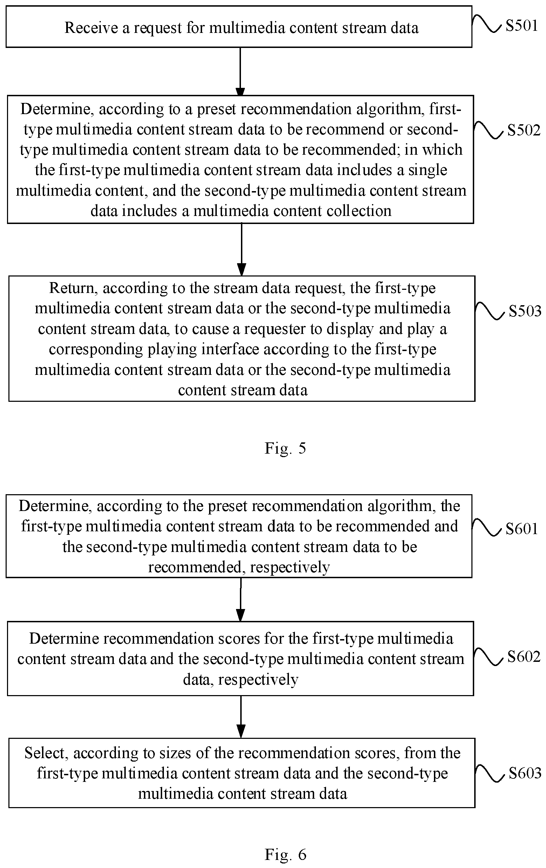

Referring to Fig. 5, Fig. 5 is a flowchart of a multimedia playing method provided by an embodiment of the present disclosure. The method of this embodiment can be applied to an electronic device such as a server, and the multimedia playing method includes:
S501: receiving a request for multimedia content stream data;
S502: determining, according to a preset recommendation algorithm, first-type multimedia content stream data to be recommend or second-type multimedia content stream data to be recommended; in which the first-type multimedia content stream data includes a single multimedia content, and the second-type multimedia content stream data includes a multimedia content collection;
S503: returning, according to the stream data request, the first-type multimedia content stream data or the second-type multimedia content stream data, to cause a requester to display and play a corresponding playing interface according to the first-type multimedia content stream data or the second-type multimedia content stream data.

**In** this embodiment, after receiving the multimedia content stream data request sent by the terminal, the server may recommend multimedia content stream data for the terminal, may recommend the first-type multimedia content stream data or the second-type multimedia content stream data, and in turn push the first-type multimedia content stream data to be recommended or the second-type multimedia content stream data to be recommended to the terminal. The terminal may display a corresponding playing interface according to the received first-type multimedia content stream data or second-type multimedia content stream data, and play it. The displayed playing interfaces and playing processes can refer to the above embodiments, which will not be detailed here.

Optionally, as illustrated in Fig. 6, when determining, according to a preset recommendation algorithm, first-type multimedia content stream data to be recommend or second-type multimedia content stream data to be recommended in S503, the method specifically includes:
S601: determining, according to the preset recommendation algorithm, the first-type multimedia content stream data to be recommended and the second-type multimedia content stream data to be recommended, respectively;
S602: determining recommendation scores for the first-type multimedia content stream data and the second-type multimedia content stream data, respectively;
S603: selecting, according to sizes of the recommendation scores, from the first-type multimedia content stream data and the second-type multimedia content stream data.

**In** this embodiment, the first-type multimedia content stream data to be recommended and the second-type multimedia content stream data to be recommended may be respectively recommended for the user according to the preset recommendation algorithm. Optionally, when recommending the first-type multimedia content stream data, the first-type multimedia content stream data to be recommended may be determined for the user according to one or more of information such as single multimedia content popularity information (including but not limited to click-through rate, consumption duration, number of followers, comments, evaluations, etc.), user's playing history record information of a single multimedia content, user portrait information, etc. When recommending the second-type multimedia content stream data, the second-type multimedia content stream data to be recommended may be determined for the user according to one or more of information such as multimedia content collection popularity information (including but not limited to click-through rate, consumption duration, number of followers, comments, evaluations, etc.), user's playing history record information of a multimedia content collection, user portrait information, etc. Of course, the information on which the preset recommendation algorithm depends may not be limited to the above examples, and this embodiment does not limit the specific recommendation algorithm, any algorithm capable of realizing the recommendation of single multimedia content and the recommendation of multimedia content collection can be used.

Further, the server also needs to determine whether to send the first-type multimedia content stream data to be recommended or the second-type multimedia content stream data to be recommended to the terminal. In this embodiment, the server respectively determines corresponding recommendation scores for the first-type multimedia content stream data to be recommended and the second-type multimedia content stream data to be recommended. The recommendation score for the first-type multimedia content stream data to be recommended and the recommendation score for the second-type multimedia content stream data to be recommended are indicators which are comparable and are able to predict the popularity of a single multimedia content or a multimedia content collection, or the degree of the user's liking or expectation for a single multimedia content or a multimedia content collection. They may be acquired through a specific algorithm depending on specific information, for example, the user's playing duration, switching operation frequency, timing, etc., for the first-type multimedia content stream data, the user's playing duration, switching operation frequency, timing, etc., for the second-type multimedia content stream data, the popularity information of single multimedia content, the popularity information of multimedia content collection, and so on. The algorithm for calculating recommendation scores is not limited in this embodiment, and may be a manually set algorithm or a machine learning algorithm, etc.

The server may determine whether to send the first-type multimedia content stream data to be recommended or the second-type multimedia content stream data to be recommended to the terminal according to sizes of the recommendation scores by comparing the recommendation scores for the first-type multimedia content stream data to be recommended and for the second-type multimedia content stream data to be recommended. For example, if the recommendation score for the first-type multimedia content stream data to be recommended is higher than the recommendation score for the second-type multimedia content stream data to be recommended, the first-type multimedia content stream data is recommended. If the recommendation score for the second-type multimedia content stream data to be recommended is higher than the recommendation score for the first-type multimedia content stream data to be recommended, the second-type multimedia content stream data to be recommended is recommended. If the recommendation score for the second-type multimedia content stream data to be recommended is equal to the recommendation score for the first-type multimedia content stream data to be recommended, one of them may be specified to be recommended. For example, the second-type multimedia content stream data is specified to be recommended, which is more convenient for the user to discover the multimedia content target efficiently, or one of them may be randomly recommended.

On the basis of any of the above embodiments, in order to guarantee the quality of the second-type multimedia content stream data, a candidate pool of the multimedia content collection may be reviewed and screened. For example, rule-based screening may be employed. The rule-based screening may be performed according to one or more of click-through rate, consumption duration, number of followers, and number of multimedia contents in multimedia content collection, so as to screen out some high-quality second-type multimedia content stream data and eliminate low-quality second-type multimedia content stream data. In addition, Natural Language Processing (NLP) or other methods may be employed to judge whether the title matches the content with respect to the screened second-type multimedia content stream data, and to eliminate the second-type multimedia content stream data whose title does not match the content, thereby guaranteeing the matching of titles and contents.

On the basis of any of the above embodiments, after determining the second-type multimedia content stream data to be recommended, the method further includes:
determining whether the second-type multimedia content stream data to be recommended is duplicated with historical second-type multimedia content stream data already recommended within a predetermined time period;
re-determining, when it is determined that the second-type multimedia content stream data to be recommended is duplicated with the historical second-type multimedia content stream data already recommended within the predetermined time period, the second-type multimedia content stream data to be recommended.

In this embodiment, in order to avoid the reception by the user from the same second-type multimedia content stream data repeatedly within a time period, the second-type multimedia content stream data may be de-duplicated after the second-type multimedia content stream data to be recommended is determined. The historical second-type multimedia content stream data that has been sent to the terminal within a predetermined time period (e.g., last 3 days) may be acquired, and may be compared with the second-type multimedia content stream data to be recommended so as to judge whether they are duplicated. If they are duplicated, another second-type multimedia content stream data to be recommended may be re-determined. The comparison process may be a comparison between the multimedia contents included within both second-type multimedia content stream data. When the included multimedia contents are completely consistent, they may be determined as the duplicated second-type multimedia content stream data. Alternatively, the determination of whether they are duplicated may be made through the comparison of other information.

On the basis of any of the above embodiments, after determining the first-type multimedia content stream data to be recommended, the method further includes:
determining whether a multimedia content in the first-type multimedia content stream data to be recommended is duplicated with a multimedia content in historical second-type multimedia content stream data already recommended within a predetermined time period;
re-determining, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determining, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

In this embodiment, the multimedia content in the first-type multimedia content stream data to be recommended may also be duplicated with the multimedia content in the historical second-type multimedia content stream data that has been sent to the terminal within a predetermined time period. In order to avoid recommending one multimedia content that has been played in the multimedia content collection to the user, after the first-type multimedia content stream data to be recommended is determined, the multimedia content in the first-type multimedia content stream data to be recommended may be compared with the multimedia content in the historical second-type multimedia content stream data that has been sent to the terminal within the predetermined time period, so as to judge whether there is duplication. If it is determined that there is duplication, another first-type multimedia content stream data to be recommended may be directly re-determined. Alternatively, if it is determined that there is duplication, it may be further judged whether the multimedia content in the historical second-type multimedia content stream data with duplication present has been played, and if it has been played, another first-type multimedia content stream data to be recommended may be re-determined, or if it has not been played, it is unnecessary to re-determine another first-type multimedia content stream data to be recommended.

On the basis of any of the above embodiments, if it is determined to send the second-type multimedia content stream data to be recommended to the terminal, before returning, according to the stream data request, the second-type multimedia content stream data, the method may further include:
acquiring a recommendation score for each multimedia content in the second-type multimedia content stream data, and sorting, according to the recommendation score, respective multimedia contents in the second-type multimedia content stream data; and/or
postponing, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

In this embodiment, when sending the second-type multimedia content stream data to the terminal, the multimedia contents in the second-type multimedia content stream data may be sorted, so as to facilitate the user to preferentially hear the multimedia content with higher popularity or which the user may prefer. During the sorting, the recommendation score for each multimedia content may be acquired, and the sorting may be made according to sizes of the recommendation scores. The recommendation score may be determined according to one or more of information such as multimedia content popularity information, user's playing history record information of multimedia content, user portrait information, the specific determination method for which is not limited here.

In addition, there may be certain one or several multimedia contents in the second-type multimedia content stream data that have been played within a predetermined time period, including being duplicated with the multimedia content in a certain historical first-type multimedia content stream data that has been sent to the terminal within the predetermined time period, or being duplicated with the multimedia content in a certain historical second-type multimedia content stream data has been sent to the terminal within the predetermined time period, and this multimedia content in the historical second-type multimedia content stream data has been played. Therefore, during the sorting, the multimedia content may be postponed in the sorting, that is, be placed at a back position in the sorting, so as to avoid the repetitively listening by the user due to being placed at a front position in the sorting, thereby affecting the users' discovery of other multimedia content and affecting the user experience. Optionally, the multimedia content may be placed at the last position in the sorting. If there are multiple multimedia contents that need to be postponed in the sorting, the sorting of such multimedia contents may be assigned according to a specific rule, such as sorting according to playing time, or sorting according to recommendation score, or the like.

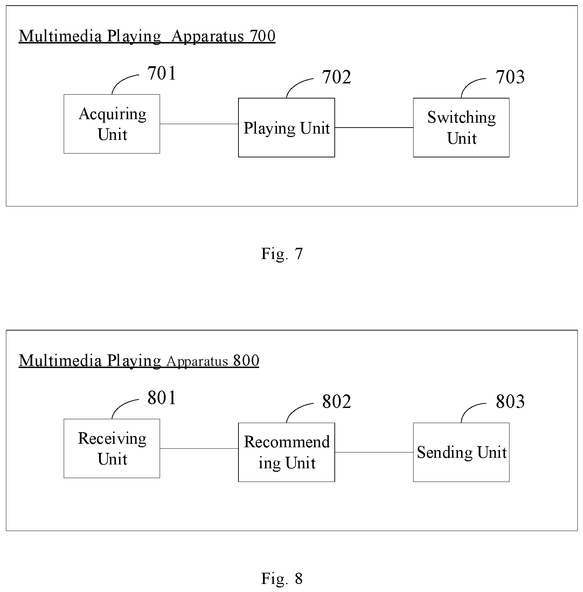

Corresponding to the multimedia playing method of the above embodiments, Fig. 7 is a structural block diagram of a multimedia playing apparatus provided by an embodiment of the present disclosure. For convenience of illustration, only the parts related to the embodiments of the present disclosure are shown. The multimedia playing apparatus is deployed in an electronic device such as a terminal. Referring to Fig. 7, the multimedia playing apparatus 700 includes an acquiring unit 701, a playing unit 702 and a switching unit 703.

The acquiring unit 701 is configured to acquire, in response to a first operation instruction in a player interface, first-type multimedia content stream data or second-type multimedia content stream data. The first-type multimedia content stream data comprises a single multimedia content, and the second-type multimedia content stream data comprises a multimedia content collection.

The playing unit 702 is configured to display, in response to acquiring the second-type multimedia content stream data, a multimedia content collection playing interface in the player interface, and play multimedia contents in the second-type multimedia content stream data in a preset order.

The switching unit 703 is configured to switch to and play, in response to a second operation instruction in the multimedia content collection playing interface, another multimedia content in the second-type multimedia content stream data. The operation mode corresponding to the second operation instruction is different from the operation mode corresponding to the first operation instruction.

In one or more embodiments in the present disclosure, the multimedia content collection playing interface comprises an interface component corresponding to each multimedia content in the second-type multimedia content stream data.

The switching unit 703, when switching to and playing, in response to the second operation instruction in the multimedia content collection playing interface, another multimedia content in the second-type multimedia content stream data, is used to:
switch, in response to a trigger instruction to an interface component corresponding to any target multimedia content in the multimedia content collection playing interface, to the target multimedia content and play the target multimedia content.

**In** one or more embodiments in the present disclosure, the switching unit 703, when switching to and playing, in response to a second operation instruction in the multimedia content collection playing interface, another multimedia content in the second-type multimedia content stream data, is used to:
switch to and play, in response to a sliding operation in a specified direction in the multimedia content collection playing interface, another target multimedia content in the second-type multimedia content stream data.

**In** one or more embodiments in the present disclosure, the playing unit 702 is further used to:
exhibit, when playing any multimedia content in the second-type multimedia content stream data, relevant information of a multimedia content being played currently in a preset region of the multimedia content collection playing interface.

**In** one or more embodiments in the present disclosure, the acquiring unit 701 is further used to: acquire, in response to the first operation instruction in the multimedia content collection playing interface, a next first-type multimedia content stream data or a next second-type multimedia content stream data again; and
the switching unit 703 is further used to: switch from a current multimedia content collection playing interface to a playing interface corresponding to the next first-type multimedia content stream data or the next second-type multimedia content stream data.

**In** one or more embodiments in the present disclosure, before the switching from a current multimedia content collection playing interface to a playing interface corresponding to the next first-type multimedia content stream data or the next second-type multimedia content stream data, the switching unit 703 is further used to:
record current playing progress information of the second-type multimedia content stream data.

After the switching from a current multimedia content collection playing interface to a playing interface corresponding to the next first-type multimedia content stream data or the next second-type multimedia content stream data, the switching unit 703 is further used to:
switch, in response to a return operation instruction in the playing interface corresponding to the next first-type multimedia content stream data or the next second-type multimedia content stream data, back to the current multimedia content collection playing interface, and continue, according to the playing progress information of the second-type multimedia content stream data, to play the multimedia content in the second-type multimedia content stream data.

**In** one or more embodiments in the present disclosure, the acquiring unit 701, when acquiring the first-type multimedia content stream data or the second-type multimedia content stream data, is used to:
determine, according to a preset recommendation algorithm, first-type multimedia content stream data to be recommend or second-type multimedia content stream data to be recommended;

**In** one or more embodiments in the present disclosure, the acquiring unit 701, when determining, according to a preset recommendation algorithm, first-type multimedia content stream data to be recommend or second-type multimedia content stream data to be recommended, is used to:
determine, according to the preset recommendation algorithm, the first-type multimedia content stream data to be recommended and the second-type multimedia content stream data to be recommended, respectively;
determine recommendation scores for the first-type multimedia content stream data and the second-type multimedia content stream data, respectively;
select, according to the recommendation scores, from the first-type multimedia content stream data and the second-type multimedia content stream data.

**In** one or more embodiments in the present disclosure, the acquiring unit 701, after determining the second-type multimedia content stream data to be recommended, is used to:
determine whether the second-type multimedia content stream data to be recommended is duplicated with historical second-type multimedia content stream data already recommended within a predetermined time period;
re-determine, when it is determined that the second-type multimedia content stream data to be recommended is duplicated with the historical second-type multimedia content stream data already recommended within the predetermined time period, the second-type multimedia content stream data to be recommended.

In one or more embodiments in the present disclosure, the acquiring unit 701, after determining the first-type multimedia content stream data to be recommended, is used to:
determine whether a multimedia content in the first-type multimedia content stream data to be recommended is duplicated with a multimedia content in historical second-type multimedia content stream data already recommended within a predetermined time period;
re-determine, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determine, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

In one or more embodiments in the present disclosure, the acquiring unit 701 is further used to:
acquire a recommendation score for each multimedia content in the second-type multimedia content stream data, and sort, according to the recommendation score, each multimedia content in the second-type multimedia content stream data; and/or
postpone, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

The apparatus provided in the embodiments can be used to implement the technical scheme of the above-mentioned method embodiments for the terminal, and the implementation principle and technical effect are similar, so the details of the embodiment are not repeated here.

Corresponding to the multimedia playing method of the above embodiments, Fig. 8 is a structural block diagram of a multimedia playing apparatus provided by an embodiment of the present disclosure. For convenience of illustration, only the parts related to the embodiments of the present disclosure are shown. The multimedia playing apparatus is deployed in an electronic device such as a server. Referring to Fig. 8, the multimedia playing apparatus 800 includes a receiving unit 801, a recommending unit 802 and a sending unit 803.

The receiving unit is configured to receive a request for multimedia content stream data.

The recommending unit is configured to determine, according to a preset recommendation algorithm, first-type multimedia content stream data to be recommend or second-type multimedia content stream data to be recommended.

The sending unit is configured to return, according to the request, the first-type multimedia content stream data or the second-type multimedia content stream data, to cause a requester to display a corresponding playing interface according to the first-type multimedia content stream data or the second-type multimedia content stream data and play.

**In** one or more embodiments in the present disclosure, the recommending unit, when determining, according to a preset recommendation algorithm, first-type multimedia content stream data to be recommend or second-type multimedia content stream data to be recommended, is further used to:
determine, according to the preset recommendation algorithm, the first-type multimedia content stream data to be recommended and the second-type multimedia content stream data to be recommended, respectively;
determine recommendation scores for the first-type multimedia content stream data and the second-type multimedia content stream data, respectively; and
select, according to the recommendation scores, from the first-type multimedia content stream data and the second-type multimedia content stream data.

**In** one or more embodiments in the present disclosure, the recommending unit, after determining the second-type multimedia content stream data to be recommended, is further used to:
determine whether the second-type multimedia content stream data to be recommended is duplicated with historical second-type multimedia content stream data already recommended within a predetermined time period;
re-determine, when it is determined that the second-type multimedia content stream data to be recommended is duplicated with the historical second-type multimedia content stream data already recommended within the predetermined time period, the second-type multimedia content stream data to be recommended.

**In** one or more embodiments in the present disclosure, the recommending unit, after determining the first-type multimedia content stream data to be recommended, is further used to:
determine whether a multimedia content in the first-type multimedia content stream data to be recommended is duplicated with a multimedia content in historical second-type multimedia content stream data already recommended within a predetermined time period;
re-determine, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determine, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

**In** one or more embodiments in the present disclosure, the recommending unit, before returning, according to the request, the second-type multimedia content stream data, is further used to:
acquire recommendation score for each multimedia content in the second-type multimedia content stream data, and sort, according to the recommendation score, each multimedia content in the second-type multimedia content stream data; and/or
postpone, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

The multimedia playing apparatus provided in the embodiments can be used to implement the technical scheme of the above-mentioned method embodiments for the server, and the implementation principle and technical effect are similar, so the details of the embodiment are not repeated here.

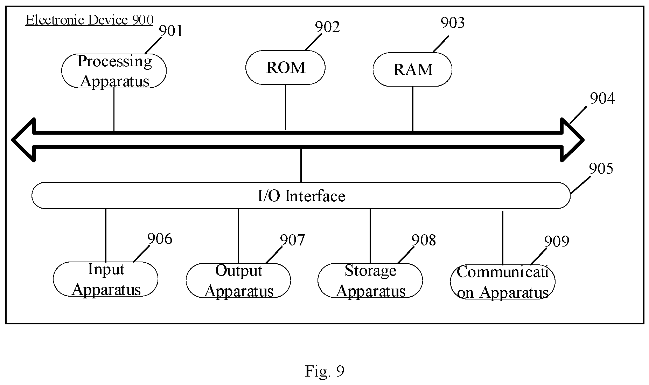

Referring to FIG. 9, FIG. 9 illustrates a schematic structural diagram of an electronic device 900 suitable for implementing some embodiments of the present disclosure, and the electronic device 900 may be the terminal or server in the above embodiments. The terminal devices may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 9 is merely an example, and should not pose any limitation to the functions and the range of use of the embodiments of the present disclosure.

As illustrated in FIG. 9, the electronic device 900 may include a processing apparatus 901 (e.g., a central processing unit, a graphics processing unit, etc.), which can perform multiple suitable actions and processing according to a program stored in a read-only memory (ROM) 902 or a program loaded from a storage apparatus 908 into a random-access memory (RAM) 903. The RAM 903 further stores multiple programs and data required for operations of the electronic device 900. The processing apparatus 901, the ROM 902, and the RAM 903 are interconnected by means of a bus 904. An input/output (I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, a gyroscope, or the like; an output apparatus 907 including, for example, a liquid crystal display (LCD), a loudspeaker, a vibrator, or the like; a storage apparatus 908 including, for example, a magnetic tape, a hard disk, or the like; and a communication apparatus 909. The communication apparatus 909 may allow the electronic device 900 to be in wireless or wired communication with other devices to exchange data. While FIG. 9 illustrates the electronic device 900 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 909 and installed, or may be installed from the storage apparatus 508, or may be installed from the ROM 902. When the computer program is executed by the processing apparatus 901, the above-mentioned functions defined in the methods at terminal or server side in some embodiments of the present disclosure are performed.

It should be noted that, the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. Examples of the computer-readable storage medium may include but not be limited to: an electrical connection with one or more wires, a portable computer disk, a hard disk, a RAM, a ROM, an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The computer-readable medium may be included in the electronic device; or exist separately, without being assembled into the electronic device.

The computer-readable medium carries one or more programs, which, when executed by the electronic device, cause the electronic device to execute the method at terminal side or server side in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. **In** the scenario related to the remote computer, the remote computer may be connected to the user's computer through any type of network, including the LAN or WAN, or the connection may be made to an external computer (for example, through the Internet using an Internet service provider).

The flowcharts and block diagrams in the accompanying drawings illustrate the architecture, functionality, and operation of possible implementations of systems, methods, and computer program products according to multiple embodiments of the present disclosure. **In** this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. The name of the module or unit does not constitute a limitation of the unit itself under a circumstance. For example, the first acquisition unit may also be described as a "at least two internet protocol addresses acquisition unit".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, RAM, ROM, EPROM or flash memory, optical fiber, CD-ROM, optical storage device, magnetic storage device, or any suitable combination of the foregoing.

In the first aspect, according to one or more embodiments in the present disclosure, a multimedia playing method is provided, which includes:
acquiring, in response to a first operation instruction in a player interface, first-type multimedia content stream data or second-type multimedia content stream data; wherein the first-type multimedia content stream data comprises a single multimedia content, and the second-type multimedia content stream data comprises a multimedia content collection;
displaying, in response to acquiring the second-type multimedia content stream data, a multimedia content collection playing interface in the player interface, and playing multimedia contents in the second-type multimedia content stream data in a preset order;
switching to and playing, in response to a second operation instruction in the multimedia content collection playing interface, another multimedia content in the second-type multimedia content stream data, wherein an operation mode corresponding to the second operation instruction is different from an operation mode corresponding to the first operation instruction.

According to one or more embodiments in the present disclosure, the multimedia content collection playing interface comprises an interface component corresponding to each multimedia content in the second-type multimedia content stream data.

The switching to and playing, in response to a second operation instruction in the multimedia content collection playing interface, another multimedia content in the second-type multimedia content stream data, comprises:
switching, in response to a trigger instruction to an interface component corresponding to any target multimedia content in the multimedia content collection playing interface, to the target multimedia content and playing the target multimedia content.

According to one or more embodiments in the present disclosure, the switching to and playing, in response to a second operation instruction in the multimedia content collection playing interface, another multimedia content in the second-type multimedia content stream data, comprises:
switching to and playing, in response to a sliding operation in a specified direction in the multimedia content collection playing interface, another target multimedia content in the second-type multimedia content stream data.

According to one or more embodiments in the present disclosure, the method further comprises:
exhibiting, when playing any multimedia content in the second-type multimedia content stream data, relevant information of a multimedia content being played currently in a preset region of the multimedia content collection playing interface.

According to one or more embodiments in the present disclosure, the method further comprises:
acquiring, in response to the first operation instruction in the multimedia content collection playing interface, a next first-type multimedia content stream data or a next second-type multimedia content stream data again; and
switching from a current multimedia content collection playing interface to a playing interface corresponding to the next first-type multimedia content stream data or the next second-type multimedia content stream data.

According to one or more embodiments in the present disclosure, before the switching from a current multimedia content collection playing interface to a playing interface corresponding to the next first-type multimedia content stream data or the next second-type multimedia content stream data, the method further comprises:
recording current playing progress information of the second-type multimedia content stream data.

After the switching from a current multimedia content collection playing interface to a playing interface corresponding to the next first-type multimedia content stream data or the next second-type multimedia content stream data, the method further comprises:
switching, in response to a return operation instruction in the playing interface corresponding to the next first-type multimedia content stream data or the next second-type multimedia content stream data, back to the current multimedia content collection playing interface, and continuing, according to the playing progress information of the second-type multimedia content stream data, to play the multimedia content in the second-type multimedia content stream data.

According to one or more embodiments in the present disclosure, the acquiring the first-type multimedia content stream data or the second-type multimedia content stream data, comprises:
determining, according to a preset recommendation algorithm, first-type multimedia content stream data to be recommend or second-type multimedia content stream data to be recommended.

According to one or more embodiments in the present disclosure, the determining, according to a preset recommendation algorithm, first-type multimedia content stream data to be recommend or second-type multimedia content stream data to be recommended comprises:
determining, according to the preset recommendation algorithm, the first-type multimedia content stream data to be recommended and the second-type multimedia content stream data to be recommended, respectively;
determining recommendation scores for the first-type multimedia content stream data and the second-type multimedia content stream data, respectively;
selecting, according to the recommendation scores, from the first-type multimedia content stream data and the second-type multimedia content stream data.

According to one or more embodiments in the present disclosure, after determining the second-type multimedia content stream data to be recommended, the method further comprises:
determining whether the second-type multimedia content stream data to be recommended is duplicated with historical second-type multimedia content stream data already recommended within a predetermined time period; and
re-determining, when it is determined that the second-type multimedia content stream data to be recommended is duplicated with the historical second-type multimedia content stream data already recommended within the predetermined time period, the second-type multimedia content stream data to be recommended.

According to one or more embodiments in the present disclosure, after determining the first-type multimedia content stream data to be recommended, the method further comprises:
determining whether a multimedia content in the first-type multimedia content stream data to be recommended is duplicated with a multimedia content in historical second-type multimedia content stream data already recommended within a predetermined time period;
re-determining, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determining, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

According to one or more embodiments in the present disclosure, before recommending the second-type multimedia content stream data, the method further comprises:
acquiring a recommendation score for each multimedia content in the second-type multimedia content stream data, and sorting, according to the recommendation score, each multimedia content in the second-type multimedia content stream data; and/or
postponing, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

**In** the second aspect, according to one or more embodiments in the present disclosure, a multimedia playing method is provided, which includes:
receiving a request for multimedia content stream data;
determining, according to a preset recommendation algorithm, first-type multimedia content stream data to be recommend or second-type multimedia content stream data to be recommended;
returning, according to the request, the first-type multimedia content stream data or the second-type multimedia content stream data, to cause a requester to display a corresponding playing interface according to the first-type multimedia content stream data or the second-type multimedia content stream data and play.

According to one or more embodiments in the present disclosure, the determining, according to a preset recommendation algorithm, first-type multimedia content stream data to be recommend or second-type multimedia content stream data to be recommended, comprises:
determining, according to the preset recommendation algorithm, the first-type multimedia content stream data to be recommended and the second-type multimedia content stream data to be recommended, respectively;
determining recommendation scores for the first-type multimedia content stream data and the second-type multimedia content stream data, respectively; and
selecting, according to the recommendation scores, from the first-type multimedia content stream data and the second-type multimedia content stream data.

According to one or more embodiments in the present disclosure, after determining the second-type multimedia content stream data to be recommended, the method further comprises:
determining whether the second-type multimedia content stream data to be recommended is duplicated with historical second-type multimedia content stream data already recommended within a predetermined time period;
re-determining, when it is determined that the second-type multimedia content stream data to be recommended is duplicated with the historical second-type multimedia content stream data already recommended within the predetermined time period, the second-type multimedia content stream data to be recommended.

According to one or more embodiments in the present disclosure, after determining the first-type multimedia content stream data to be recommended, the method further comprises:
determining whether a multimedia content in the first-type multimedia content stream data to be recommended is duplicated with a multimedia content in historical second-type multimedia content stream data already recommended within a predetermined time period;
re-determining, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determining, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

According to one or more embodiments in the present disclosure, before returning, according to the request, the second-type multimedia content stream data, the method further comprises:
acquiring a recommendation score for each multimedia content in the second-type multimedia content stream data, and sorting, according to the recommendation score, each multimedia content in the second-type multimedia content stream data; and/or
postponing, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

**In** the third aspect, according to one or more embodiments in the present disclosure, a multimedia playing device is provided, which includes: an acquiring unit, a playing unit, and a switching unit.

The acquiring unit is configured to acquire, in response to a first operation instruction in a player interface, first-type multimedia content stream data or second-type multimedia content stream data. The first-type multimedia content stream data comprises a single multimedia content, and the second-type multimedia content stream data comprises a multimedia content collection.

The playing unit is configured to display, in response to acquiring the second-type multimedia content stream data, a multimedia content collection playing interface in the player interface, and play multimedia contents in the second-type multimedia content stream data in a preset order.

The switching unit is configured to switch to and play, in response to a second operation instruction in the multimedia content collection playing interface, another multimedia content in the second-type multimedia content stream data. The operation mode corresponding to the second operation instruction is different from the operation mode corresponding to the first operation instruction.

According to one or more embodiments in the present disclosure, the multimedia content collection playing interface comprises an interface component corresponding to each multimedia content in the second-type multimedia content stream data.

The switching unit, when switching to and playing, in response to a second operation instruction in the multimedia content collection playing interface, another multimedia content in the second-type multimedia content stream data, is used to:
switch, in response to a trigger instruction to an interface component corresponding to any target multimedia content in the multimedia content collection playing interface, to the target multimedia content and play the target multimedia content.

According to one or more embodiments in the present disclosure, the switching unit, when switching to and playing, in response to a second operation instruction in the multimedia content collection playing interface, another multimedia content in the second-type multimedia content stream data, is used to:
switch to and play, in response to a sliding operation in a specified direction in the multimedia content collection playing interface, another target multimedia content in the second-type multimedia content stream data.

According to one or more embodiments in the present disclosure, the playing unit is further used to:
exhibit, when playing any multimedia content in the second-type multimedia content stream data, relevant information of a multimedia content being played currently in a preset region of the multimedia content collection playing interface.

According to one or more embodiments in the present disclosure, the acquiring unit is further used to: acquire, in response to the first operation instruction in the multimedia content collection playing interface, a next first-type multimedia content stream data or a next second-type multimedia content stream data again; and
the acquiring unit is further used to: switch from a current multimedia content collection playing interface to a playing interface corresponding to the next first-type multimedia content stream data or the next second-type multimedia content stream data.

According to one or more embodiments in the present disclosure, the switching unit, before the switching from a current multimedia content collection playing interface to a playing interface corresponding to the next first-type multimedia content stream data or the next second-type multimedia content stream data, is further used to:
record current playing progress information of the second-type multimedia content stream data.

The switching unit, after the switching from a current multimedia content collection playing interface to a playing interface corresponding to the next first-type multimedia content stream data or the next second-type multimedia content stream data, is further used to:
switch, in response to a return operation instruction in the playing interface corresponding to the next first-type multimedia content stream data or the next second-type multimedia content stream data, back to the current multimedia content collection playing interface, and continue, according to the playing progress information of the second-type multimedia content stream data, to play the multimedia content in the second-type multimedia content stream data.

According to one or more embodiments in the present disclosure, the acquiring unit, when acquiring the first-type multimedia content stream data or the second-type multimedia content stream data, is further used to:
determine, according to a preset recommendation algorithm, first-type multimedia content stream data to be recommend or second-type multimedia content stream data to be recommended.

According to one or more embodiments in the present disclosure, the acquiring unit, when determining, according to a preset recommendation algorithm, first-type multimedia content stream data to be recommend or second-type multimedia content stream data to be recommended, is further used to:
determine, according to the preset recommendation algorithm, the first-type multimedia content stream data to be recommended and the second-type multimedia content stream data to be recommended, respectively;
determine recommendation scores for the first-type multimedia content stream data and the second-type multimedia content stream data, respectively;
select, according to the recommendation scores, from the first-type multimedia content stream data and the second-type multimedia content stream data.

According to one or more embodiments in the present disclosure, the acquiring unit, after determining the second-type multimedia content stream data to be recommended, is further used to:
determine whether the second-type multimedia content stream data to be recommended is duplicated with historical second-type multimedia content stream data already recommended within a predetermined time period; and
re-determine, when it is determined that the second-type multimedia content stream data to be recommended is duplicated with the historical second-type multimedia content stream data already recommended within the predetermined time period, the second-type multimedia content stream data to be recommended.

According to one or more embodiments in the present disclosure, the acquiring unit, after determining the first-type multimedia content stream data to be recommended, is further used to:
determine whether a multimedia content in the first-type multimedia content stream data to be recommended is duplicated with a multimedia content in historical second-type multimedia content stream data already recommended within a predetermined time period;
re-determine, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determine, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

According to one or more embodiments in the present disclosure, the acquiring unit is further used to:
acquire a recommendation score for each multimedia content in the second-type multimedia content stream data, and sort, according to the recommendation score, each multimedia content in the second-type multimedia content stream data; and/or
postpone when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

**In** the fourth aspect, according to one or more embodiments in the present disclosure, a multimedia playing method is provided, which includes: a receiving unit, a recommending unit, and a sending unit.

The receiving unit is configured to receive a request for multimedia content stream data.

The recommending unit is configured to determine, according to a preset recommendation algorithm, first-type multimedia content stream data to be recommend or second-type multimedia content stream data to be recommended.

The sending unit is configured to return, according to the request, the first-type multimedia content stream data or the second-type multimedia content stream data, to cause a requester to display a corresponding playing interface according to the first-type multimedia content stream data or the second-type multimedia content stream data and play.

According to one or more embodiments in the present disclosure, the recommending unit, when determining, according to a preset recommendation algorithm, first-type multimedia content stream data to be recommend or second-type multimedia content stream data to be recommended, is used to:
determine, according to the preset recommendation algorithm, the first-type multimedia content stream data to be recommended and the second-type multimedia content stream data to be recommended, respectively;
determine recommendation scores for the first-type multimedia content stream data and the second-type multimedia content stream data, respectively; and
select, according to the recommendation scores, from the first-type multimedia content stream data and the second-type multimedia content stream data.

According to one or more embodiments in the present disclosure, the recommending unit, after determining the second-type multimedia content stream data to be recommended, is used to:
determine whether the second-type multimedia content stream data to be recommended is duplicated with historical second-type multimedia content stream data already recommended within a predetermined time period;
re-determine, when it is determined that the second-type multimedia content stream data to be recommended is duplicated with the historical second-type multimedia content stream data already recommended within the predetermined time period, the second-type multimedia content stream data to be recommended.

According to one or more embodiments in the present disclosure, the recommending unit, after determining the first-type multimedia content stream data to be recommended, is used to:
determine whether a multimedia content in the first-type multimedia content stream data to be recommended is duplicated with a multimedia content in historical second-type multimedia content stream data already recommended within a predetermined time period;
re-determine, when it is determined that the multimedia content in the first-type multimedia content stream data to be recommended is duplicated with the multimedia content in the historical second-type multimedia content stream data already recommended within the predetermined time period, the first-type multimedia content stream data to be recommended; or re-determine, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

According to one or more embodiments in the present disclosure, the recommending unit, before returning, according to the request, the second-type multimedia content stream data, is used to:
acquire a recommendation score for each multimedia content in the second-type multimedia content stream data, and sort, according to the recommendation score, each multimedia content in the second-type multimedia content stream data; and/or
postpone, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

**In** the fifth aspect, according to one or more embodiments in the present disclosure, an electronic device is provided, which includes at least one processor and a memory.

The memory stores computer-executable instructions.

The at least one processor executes the computer-executable instructions stored in the memory, causing the at least one processor to implement the multimedia playing method described in the first aspect and various possible designs of the first aspect above.

**In** the sixth aspect, according to one or more embodiments in the present disclosure, a computer-readable storage medium is provided, which has stored therein computer-executable instructions. When executed by a processor, the computer-executable instructions cause the processor to implement the multimedia playing method described in the first aspect and various possible designs of the first aspect above or the multimedia playing method described in the second aspect and various possible designs of the second aspect above.

**In** the seventh aspect, according to one or more embodiments in the present disclosure, a computer program product comprising computer-executable instructions is provided. When executed by a processor, the computer-executable instructions cause the processor to implement the multimedia playing method described in the first aspect and various possible designs of the first aspect above or the multimedia playing method described in the second aspect and various possible designs of the second aspect above.

In the eighth aspect, according to one or more embodiments in the present disclosure, a computer program is provided. When executed by a processor, the computer program causes the processor to implement the multimedia playing method described in the first aspect and various possible designs of the first aspect above or the multimedia playing method described in the second aspect and various possible designs of the second aspect above.

The above description is only the preferred embodiment of the present disclosure and the explanation of the applied technical principles. It should be understood by those skilled in the art that the disclosure scope involved in the present disclosure is not limited to the embodiments formed by the specific combination of the above-mentioned technical features, but also other embodiments formed by any combination of the above-mentioned technical features or their equivalent features without departing from the above-mentioned disclosure concepts. For example, the above features are replaced with (but not limited to) technical features having similar functions disclosed in the present disclosure, so as to form an embodiment.

Furthermore, although the various operations are depicted in a particular order, it should not be understood as requiring that these operations be performed in the particular order as illustrated or in a sequential order. Under a certain circumstance, multitasking and parallel processing may be beneficial. Likewise, although multiple implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments separately or in any suitable sub-combination.

Although the subject matter has been described in language specific to structural features and/or methodological logical actions, it should be understood that the subject matter defined in the appended claims is not necessarily limited to the specific features or actions described above. On the contrary, the specific features and actions described above are only exemplary forms of implementing the claims.

## Claims

1. A multimedia playing method, comprising:
acquiring, in response to a first operation instruction in a player interface, first-type multimedia content stream data or second-type multimedia content stream data; wherein the first-type multimedia content stream data comprises a single multimedia content, and the second-type multimedia content stream data comprises a multimedia content collection;
displaying, in response to acquiring the second-type multimedia content stream data, a multimedia content collection playing interface in the player interface, and playing multimedia contents in the second-type multimedia content stream data in a preset order; and
switching to and playing, in response to a second operation instruction in the multimedia content collection playing interface, another multimedia content in the second-type multimedia content stream data, wherein an operation mode corresponding to the second operation instruction is different from an operation mode corresponding to the first operation instruction.

2. The method according to claim **1,** wherein the multimedia content collection playing interface comprises an interface component corresponding to each multimedia content in the second-type multimedia content stream data;
the switching to and playing, in response to a second operation instruction in the multimedia content collection playing interface, another multimedia content in the second-type multimedia content stream data, comprises:
switching, in response to a trigger instruction to an interface component corresponding to any target multimedia content in the multimedia content collection playing interface, to the target multimedia content and playing the target multimedia content.

3. The method according to claim 1, wherein the switching to and playing, in response to a second operation instruction in the multimedia content collection playing interface, another multimedia content in the second-type multimedia content stream data, comprises:
switching to and playing, in response to a sliding operation in a specified direction in the multimedia content collection playing interface, another target multimedia content in the second-type multimedia content stream data.

4. The method according to any of claims 1-3, further comprising:
exhibiting, when playing any multimedia content in the second-type multimedia content stream data, relevant information of a multimedia content being played currently in a preset region of the multimedia content collection playing interface.

5. The method according to any of claims 1-4, further comprising:
acquiring, in response to the first operation instruction in the multimedia content collection playing interface, a next first-type multimedia content stream data or a next second-type multimedia content stream data again; and
switching from a current multimedia content collection playing interface to a playing interface corresponding to the next first-type multimedia content stream data or the next second-type multimedia content stream data.

6. The method according to claim 5, wherein before the switching from a current multimedia content collection playing interface to a playing interface corresponding to the next first-type multimedia content stream data or the next second-type multimedia content stream data, further comprising:
recording current playing progress information of the second-type multimedia content stream data; and
after the switching from a current multimedia content collection playing interface to a playing interface corresponding to the next first-type multimedia content stream data or the next second-type multimedia content stream data, further comprising:
switching, in response to a return operation instruction in the playing interface corresponding to the next first-type multimedia content stream data or the next second-type multimedia content stream data, back to the current multimedia content collection playing interface, and
continuing, according to the playing progress information of the second-type multimedia content stream data, to play the multimedia content in the second-type multimedia content stream data.

7. The method according to any of claims 1-6, wherein the acquiring the first-type multimedia content stream data or the second-type multimedia content stream data, comprises:
determining, according to a preset recommendation algorithm, first-type multimedia content stream data to be recommend or second-type multimedia content stream data to be recommended;
wherein the determining, according to a preset recommendation algorithm, first-type multimedia content stream data to be recommend or second-type multimedia content stream data to be recommended comprises:
determining, according to the preset recommendation algorithm, the first-type multimedia content stream data to be recommended and the second-type multimedia content stream data to be recommended, respectively;
determining recommendation scores for the first-type multimedia content stream data and the second-type multimedia content stream data, respectively; and
selecting, according to the recommendation scores, from the first-type multimedia content stream data and the second-type multimedia content stream data.

8. The method according to claim 7, after determining the second-type multimedia content stream data to be recommended, further comprising:
determining whether the second-type multimedia content stream data to be recommended is duplicated with historical second-type multimedia content stream data already recommended within a predetermined time period; and
re-determining, when it is determined that the second-type multimedia content stream data to be recommended is duplicated with the historical second-type multimedia content stream data already recommended within the predetermined time period, the second-type multimedia content stream data to be recommended.

9. The method according to claim 7 or 8, after determining the first-type multimedia content stream data to be recommended, further comprising:
determining whether a multimedia content in the first-type multimedia content stream data to be recommended is duplicated with a multimedia content in historical second-type multimedia content stream data already recommended within a predetermined time period; and
re-determining, when it is determined that the multimedia content in the first-type multimedia content stream data to be recommended is duplicated with the multimedia content in the historical second-type multimedia content stream data already recommended within the predetermined time period, the first-type multimedia content stream data to be recommended;
or re-determining, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

10. The method according to claim 7 or 8, before recommending the second-type multimedia content stream data, further comprising:
acquiring a recommendation score for each multimedia content in the second-type multimedia content stream data, and sorting, according to the recommendation score, each multimedia content in the second-type multimedia content stream data; and/or
postponing, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

11. A multimedia playing method, comprising:
receiving a request for multimedia content stream data;
determining, according to a preset recommendation algorithm, first-type multimedia content stream data to be recommend or second-type multimedia content stream data to be recommended; and
returning, according to the request, the first-type multimedia content stream data or the second-type multimedia content stream data, to cause a requester to display a corresponding playing interface according to the first-type multimedia content stream data or the second-type multimedia content stream data and play.

12. The method according to claim 11, wherein the determining, according to a preset recommendation algorithm, first-type multimedia content stream data to be recommend or second-type multimedia content stream data to be recommended, comprises:
determining, according to the preset recommendation algorithm, the first-type multimedia content stream data to be recommended and the second-type multimedia content stream data to be recommended, respectively;
determining recommendation scores for the first-type multimedia content stream data and the second-type multimedia content stream data, respectively; and
selecting, according to the recommendation scores, from the first-type multimedia content stream data and the second-type multimedia content stream data.

13. The method according to claim 11 or 12, after determining the second-type multimedia content stream data to be recommended, further comprising:
determining whether the second-type multimedia content stream data to be recommended is duplicated with historical second-type multimedia content stream data already recommended within a predetermined time period; and
re-determining, when it is determined that the second-type multimedia content stream data to be recommended is duplicated with the historical second-type multimedia content stream data already recommended within the predetermined time period, the second-type multimedia content stream data to be recommended.

14. The method according to claim 11 or 12, after determining the first-type multimedia content stream data to be recommended, further comprising:
determining whether a multimedia content in the first-type multimedia content stream data to be recommended is duplicated with a multimedia content in historical second-type multimedia content stream data already recommended within a predetermined time period; and
re-determining, when it is determined that the multimedia content in the first-type multimedia content stream data to be recommended is duplicated with the multimedia content in the historical second-type multimedia content stream data already recommended within the predetermined time period, the first-type multimedia content stream data to be recommended;
or re-determining, when it is determined that the multimedia content in the first-type multimedia content stream data to be recommended is duplicated with the multimedia content in the historical second-type multimedia content stream data already recommended within the predetermined time period, and the multimedia content in the historical second-type multimedia content stream data has been played, the first-type multimedia content stream data to be recommended.

15. The method according to claim **11,** before returning, according to the request, the second-type multimedia content stream data, further comprising:
acquiring a recommendation score for each multimedia content in the second-type multimedia content stream data, and sorting, according to the recommendation score, each multimedia content in the second-type multimedia content stream data; and/or
postponing, when any multimedia content in the second-type multimedia content stream data is duplicated with a multimedia content in historical first-type multimedia content stream data already recommended within a predetermined time period, and/or is duplicated with a multimedia content in historical second-type multimedia content stream data already recommended within a predetermined time period, and the multimedia content has been played, the multimedia content in the sorting.

16. A multimedia playing apparatus, comprising:
an acquiring unit, configured to acquire, in response to a first operation instruction in a player interface, first-type multimedia content stream data or second-type multimedia content stream data;
a playing unit, configured to display, in response to acquiring the second-type multimedia content stream data, a multimedia content collection playing interface in the player interface, and play multimedia contents in the second-type multimedia content stream data in a preset order; and
a switching unit, configured to switch to and play, in response to a second operation instruction in the multimedia content collection playing interface, another multimedia content in the second-type multimedia content stream data, wherein an operation mode corresponding to the second operation instruction is different from an operation mode corresponding to the first operation instruction.

17. A multimedia playing apparatus, comprising:
a receiving unit, configured to receive a request for multimedia content stream data;
a recommending unit, configured to determine, according to a preset recommendation algorithm, first-type multimedia content stream data to be recommend or second-type multimedia content stream data to be recommended; and
a sending unit, configured to return, according to the request, the first-type multimedia content stream data or the second-type multimedia content stream data, to cause a requester to display a corresponding playing interface according to the first-type multimedia content stream data or the second-type multimedia content stream data and play.

18. An electronic device, comprising: at least one processor and a memory;
wherein the memory stores computer-executable instructions; and
the at least one processor executes the computer-executable instructions stored in the memory, causing the at least one processor to implement the method according to any of claims 1-10 or 11-15.

19. A computer-readable storage medium having stored therein computer-executable instructions which, when executed by a processor, cause the processor to implement the method according to any of claims 1-10 or 11-15.

20. A computer program product comprising computer-executable instructions which, when executed by a processor, cause the processor to implement the method according to any of claims 1-10 or 11-15.

21. A computer program which, when executed by a processor, causes the processor to implement the method according to any of claims 1-10 or 11-15.
